# NEUE EUROPÄISCHE PATENTSCHRIFT

(11) **EP 1 829 075 B2**
(45) Veröffentlichungstag und Bekanntmachung des Hinweises auf die Entscheidung über den Einspruch: **19.06.2013**
(45) Hinweis auf die Patenterteilung: 04.03.2009
(21) Anmeldenummer: 05819183.4
(22) Anmeldetag: 15.12.2005
(51) Int. Cl.: H01H 33/12, H02B 13/035

(54) **HOCHSPANNUNGSSCHALTANLAGE**
HIGH VOLTAGE SWITCHGEAR
INSTALLATION DE DISTRIBUTION ELECTRIQUE HAUTE TENSION

(30) Priorität: 21.12.2004 DE 102004061358
(43) Veröffentlichungstag der Anmeldung: 05.09.2007
(73) Patentinhaber: ABB Technology AG, 8050 Zürich (CH)
(72) Erfinder: BETZ, Thomas, 63505 Langenselbold (DE); GRANATA, Carlo, I-26824 Cavenago d'Adda (IT); GNANADHANDAPANI, Ilango, CH-8052 Zürich (CH)
(74) Vertreter: Miller, Toivo
(86) Internationale Anmeldenummer: PCT/EP2005/013474
(87) Internationale Veröffentlichungsnummer: WO 2006/066785

(56) Entgegenhaltungen:
- DE-C1- 19 807 777
- DE-U1- 29 816 914
- JP-A- 55 103 023
- US-A- 5 006 958
- US-A1- 2003 141 281

## Beschreibung

Die Erfindung betrifft Aufteilmodule für eine gasisolierte Hochspannungsschaltanlage. Die Erfindung betrifft weiterhin eine gasisolierte Hochspannungsschaltanlage.

Es ist allgemein bekannt, dass gasisolierte Hochspannungsschaltanlagen mit Nennspannungen von über 200 kV üblicherweise als einphasig gekapselte Systeme ausgelegt sind. Dabei sind die Schaltgeräte, wie beispielsweise Leistungsschalter, Trenner und Erder, sowie weitere Komponenten, wie beispielsweise Freileitungsanschlüsse, einphasig ausgeführt und in separaten Gehäusen angeordnet.

Auch die drei Phasenleiter einer Sammelschiene sind in separaten, in der Regel rohrförmigen, Gehäusen angeordnet. Aufgrund dieser Bauart ergibt sich jedoch ein vergleichsweise hoher Platzbedarf.

Die Druckschrift JP2000312411(A) offenbart eine gasisolierte Schaltanlage mit einem Busverteiler mit drei einphasigen Schnittstellen, die auf einer außenseitigen Mantelfläche des Busverteilers angeordnet sind.

Die Druckschrift US 6,624,372 B1 offenbart ebenfalls eine gasisolierte Schaltanlage mit einem Verteilermodul mit einer dreiphasigen Schnittstelle und drei einphasigen Schnittstellen.

Aus der Druckschrift WO 00/45486 ist eine Freiluft-Hochspannungsschalteinrichtung bekannt mit einem Modul zum Einkoppeln von Freileitungsdurchführungen.

Der Erfindung liegt die Aufgabe zugrunde, eine Hochspannungsschaltanlage mit einem verringerten Platzbedarf anzugeben.

Die Aufgabe wird auch durch ein Aufteilmodul mit den im Anspruch 1 genannten Merkmalen gelöst.

Ein erfindungsgemäßes Aufteilmodul weist zwei dreiphasige Schnittstellen und drei einphasige Schnittstellen auf. Innerhalb des Aufteilmoduls sind drei Phasenleiter von der zwei dreiphasigen Schnittstelle jeweils zu den einphasigen Schnittstellen geführt.

Ein solches Aufteilmodul gestattet eine Anbindung von einem Sammelschienenmodul mit zwei, dreiphasigen Schnittstelle an drei einphasige Leistungsschalter. Sammelschienenmodule mit einer dreiphasigen Schnittstelle sind für Schaltanlagen mit geringer Nennspannung, insbesondere von 100 kV bis 200 kV, bekannt. Vorteilhaft ist mithilfe eines Aufteilmoduls ein bekanntes Sammelschienenmodul in einer erfindungsgemäßen Hochspannungsschaltanlage einsetzbar.

Weiterhin gestattet ein solches Aufteilmodul eine Anbindung von drei einphasigen Leistungsschaltern an eine dreiphasige Abgangseinheit.

Diese Aufgabe wird auch erfindungsgemäß durch eine Hochspannungsschaltanlage mit den im Anspruch 7 genannten Merkmalen gelöst.

Eine erfindungsgemäße gasisolierte Hochspannungsschaltanlage umfasst mindestens eine drei Phasenleiter aufweisende Sammelschiene, wobei jeder Phasenleiter mit dem Eingang eines ihm zugeordneten Sammelschienentrenners verbunden ist. Dabei sind die Phasenleiter und die Sammelschienentrenner in einem gemeinsamen dreiphasigen Sammelschienenmodul angeordnet. Die erfindungsgemäße Hochspannungsschaltanlage umfasst weiterhin drei einphasige Leistungsschalter, welche jeweils in einem separaten Leistungsschaltergehäuse angeordnet sind. Jeder Sammelschienentrenner ist dabei ausgangsseitig mit je einem ihm zugeordneten Leistungsschalter verbunden.

Durch diese Anordnung, bei welcher die drei Phasenleiter einer Sammelschiene und die zugehörigen Sammelschienentrenner in einem gemeinsamen Gehäuse angeordnet sind, ist der Platzbedarf der Hochspannungsschaltanlage gegenüber einer herkömmlichen Hochspannungsschaltanlage vorteilhaft verringert.

Weitere vorteilhafte Ausgestaltungen der Erfindung sind den abhängigen Ansprüchen zu entnehmen.

Die Zeichnungen zeigen:
- Fig. 1: ein Schaltbild eines ersten Abgangsfeldes einer Schaltanlage gemäß den Stand der Technik,
- Fig. 2: ein Schaltbild eines zweiten Abgangsfeldes einer Schaltanlage,
- Fig. 3: ein Aufteilmodul zum Anschluss an zwei Sammelschienen,
- Fig. 4: ein Aufteilmodul zum Anschluss an eine Abgangseinheit und
- Fig. 5: ein Schaltbild eines dritten Abgangsfeldes einer Schaltanlage.

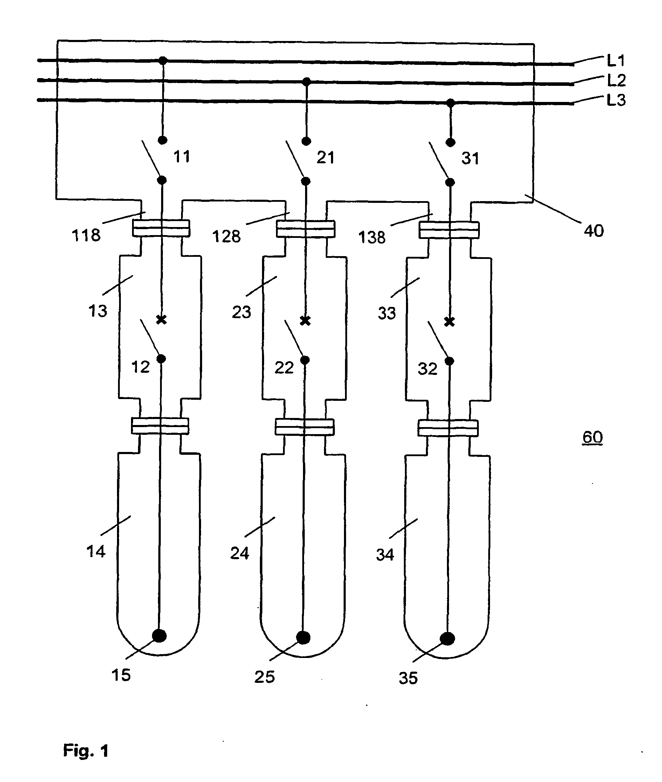

Fig. 1 zeigt ein Schaltbild eines ersten dreiphasigen Abgangsfeldes 60 einer dreiphasigen Schaltanlage gemäß den Stand der Technik. Die Schaltanlage ist für eine Nennspannung von etwa 200 kV bis 250 kV ausgelegt. Aber auch ein Einsatz bei geringerer Nennspannung, beispielsweise von 100 kV bis 200 kV, oder bei höherer Nennspannung, beispielsweise von 250 kV bis 400 kV, ist möglich.

Die gezeigte Schaltanlage ist als metallgekapseite, gasisolierte Hochspannungsschaltanlage ausgeführt. Als Isoliergas kommt Schwefelhexafluorid (SF6) zum Einsatz. Alternativ sind auch Stickstoff (N2) oder Kohlendioxyd (CO2) als Isoliergas ersetztbar.

Die Schaltanlage weist eine Sammelschiene mit drei Phasenleitern L1, L2, L3 auf. Die drei Phasenleiter L1, L2, L3 sind im Bereich des ersten Abgangsfeldes 60 innerhalb eines ersten Sammelschienenmoduls 40 und weiter zu hier nicht dargestellten Sammelschienenmodulen von benachbarten Feldern geführt.

Das Gehäuse des ersten Sammelschienenmoduls 40 ist zylinderförmig ausgebildet, wobei die Phasenleiter L1, L2, L3 der Sammelschiene parallel zur Mittelachse des Gehäuses des ersten Sammelschienenmoduls 40 geführt sind.

Das erste Sammelschienenmodul 40 weist drei Flanschstutzen 118, 128, 138 zum Anschluss von Leistungsschaltergehäusen oder anderer Module auf. Diese Flanschstutzen sind an der Außenseite des zylinderförmigen Gehäuses des ersten Sammelschienenmoduls 40 radial vorspringend und entlang einer Mantellinie nebeneinanderliegend angeordnet.

Weiterhin weist das erste Sammelschienenmodul 40 an jeder Stirnseite seines zylinderförmigen Gehäuses je einen hier nicht gezeigten Flanschstutzen zum Anschluss je eines weiteren Sammelschienenmoduls oder eines sonstigen Elements, wie beispielsweise einer Abdeckkappe auf.

Dem ersten Phasenleiter L1 ist ein erster Sammelschienentrenner 11 zugeordnet, welcher eingangsseitig mit dem ersten Phasenleiter L1 verbunden ist. Der Sammelschienentrenner 11 ist dabei ebenfalls innerhalb des ersten Sammelschienenmoduls 40 angeordnet. Entsprechend ist der zweite Phasenleiter L2 mit einem zweiten Sammelschienentrenner 21 und der dritte Phasenleiter L3 mit einem dritten Sammelschienentrenner 31 verbunden.

Weiterhin ist jedem Sammelschienentrenner 11, 21, 31 je ein hier nicht dargestellter Erder zugeordnet, welcher mit dem Ausgang des betreffenden Sammelschienentrenners 11, 21, 31 verbunden ist. Die Sammelschienentrenner 11, 21, 31 und die zugeordneten Erder können dabei als separate Schaltgeräte oder als kombinierte Trenn-/Erdschalter ausgeführt sein. Die Sammelschienentrenner 11, 21, 31 sind hierbei insbesondere als Schubtrenner ausgeführt, aber auch eine Ausgestaltung als Drehtrenner ist denkbar.

Dem ersten Sammelschienentrenner 11 ist ein erster Leistungsschalters 12 zugeordnet, mit welchem er ausgangsseitig verbunden ist. Der erste Leistungsschalter 12 ist dabei in einem separaten ersten Leistungsschaltergehäuse 13 angeordnet, welches an dem ersten Flanschstutzen 118 des ersten Sammelschienenmoduls 40 befestigt ist.

Entsprechend ist dem zweiten Sammelschienentrenner 21 ein zweiter Leistungsschalter 22 zugeordnet. Der zweite Leistungsschalter 22 ist dabei in einem separaten zweiten Leistungsschaltergehäuse 23 angeordnet, welches an dem zweiten Flanschstutzen 128 des ersten Sammelschienenmoduls 40 befestigt ist. Dem dritten Sammelschienentrenner 31 ist ein dritter Leistungsschalter 32 zugeordnet. Der dritte Leistungsschalter 32 ist in einem separaten dritten Leistungsschaltergehäuse 33 angeordnet, welches an dem dritten Flanschstutzen 138 des ersten Sammelschienenmoduls 40 befestigt ist.

Die Verbindungsleiter zwischen den Sammelschienentrennern 11, 21, 31 und den Leistungsschaltern 12, 22, 32 sind dabei jeweils separat durch je einen der drei Flanschstutzen des ersten Sammelschienenmoduls 40 geführt.

Zudem ist zwischen den Leistungsschaltergehäusen 13, 23, 33 und den drei Flanschstutzen 118, 128, 138 des ersten Sammelschienenmoduls 40 je ein Zwischenstück einfügbar. Ein solches Zwischenstück ist beispielsweise als Abzweigstück ausgebildet und gestattet so den Anschluss von zwei oder mehr Sammelschienen. Auf diese Art sind die Leistungsschalter vergleichsweise einfach mit mehreren Sammelschienen verbindbar.

An das erste Leistungsschaltergehäuse 13 schließt ein erstes Abgangsgehäuse 14 an, welches in mehrere hier nicht dargestellte hintereinandergeschaltete Segmente unterteilt ist. In den Segmenten des ersten Abgangsgehäuses 14 sind dabei weitere hier nicht dargestellte Komponenten, wie beispielsweise ein Abgangstrenner und ein Abgangserder, angeordnet. Das erste Abgangsgehäuse 14 weist einen ersten Kabelanschlusspunkt 15 auf, an welchen ein Hochspannungskabel anschließbar ist.

Entsprechend ist das zweite Leistungsschaltergehäuse 23 mit einem zweiten Abgangsgehäuse 24 verbunden, welches einen zweiten Kabelanschlusspunkt 25 aufweist, und das dritte Leistungsschaltergehäuse 33 ist mit einem dritten Abgangsgehäuse 34 mit einem dritten Kabelanschlusspunkt 35 verbunden.

An den Abgangsgehäusen 14, 24, 34 sind hier nicht dargestellte Spannungswandler angeordnet, welche mit den entsprechenden Phasenleitern L1, L2, L3 verbunden sind und deren Spannung gegen Erde messen.

Anstelle der Kabelanschlusspunkte 15, 25, 35 können ohne weiteres auch Freiluftdurchführungen zum Anschluss an Seile einer Freileitung vorgesehen sein. Auch Anschlusselemente zum Anschluss eines Transformators sind denkbar und innerhalb des Erfindungsgedankens.

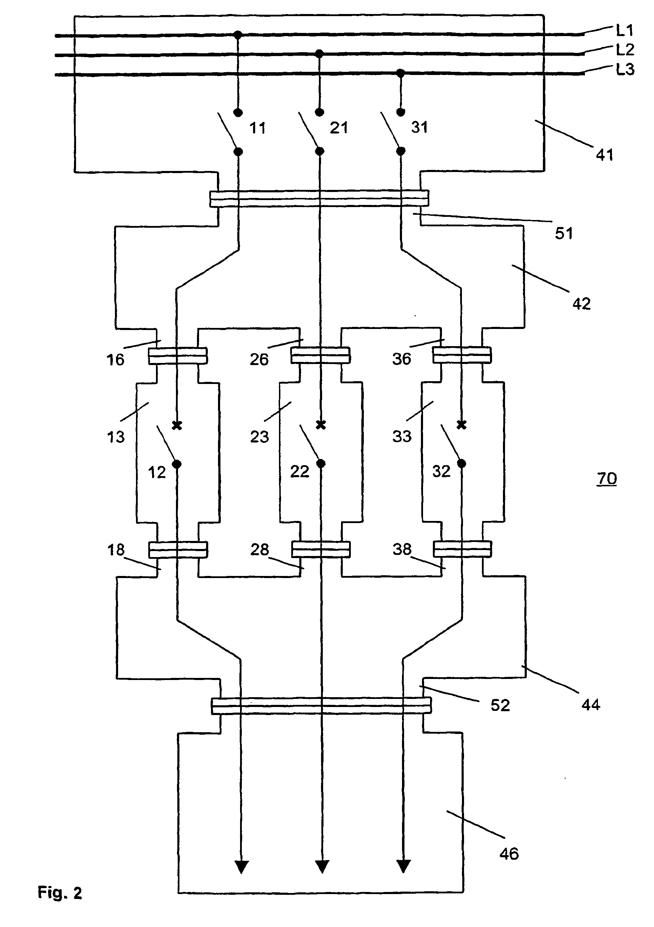

In Fig. 2 ist ein Schaltbild eines zweiten dreiphasigen Abgangsfeldes 70 einer dreiphasigen Schaltanlage gezeigt. Für gleichartige Bauteile werden im folgenden die gleichen Bezugszeichen wie in Fig. 1 verwendet. Ähnlich wie in Fig. 1 verlaufen die drei Phasenleiter L1, L2, L3 einer Sammelschiene innerhalb eines zweiten, zylinderförmig ausgebildeten Sammelschienenmoduls 41 parallel zur dessen Mittelachse, und die den Phasenleitern L1, L2, L3 zugeordneten Sammelschienentrenner 11, 21, 31 sind innerhalb des Gehäuses des zweiten Sammelschienenmoduls 41 angeordnet.

Das zweite Sammelschienenmodul 41 weist einen an der Außenseite seines Gehäuses angeordneten, radial vorspringenden Flanschstutzen auf, an welchem ein erstes Aufteilmodul 42 befestigt ist.

Weiterhin weist das zweite Sammelschienenmodul 41 an jeder Stirnseite seines zylinderförmigen Gehäuses je einen hier nicht gezeigten Flanschstutzen zum Anschluss je eines weiteren Sammelschienenmoduls oder eines sonstigen Elements, wie beispielsweise einer Abdeckkappe auf.

Das erste Aufteilmodul 42 besitzt eine erste dreiphasige Schnittstelle 51 mittels der es an die Ausgänge der Sammelschienentrenner 11, 21, 31 angeschlossen ist. Diese erste dreiphasige Schnittstelle 51 des ersten Aufteilmoduls 42 umfasst auch einen Flanschstutzen, mittels welchem das erste Aufteilmodul 42 mit dem Flanschstutzen des zweiten Sammelschienenmoduls 41 verbunden, beispielsweise verschraubt, ist.

Das erste Aufteilmodul 42 besitzt weiterhin drei einphasige Schnittstellen 16, 26, 36, an welche je ein einphasiger Leistungsschalter 12, 22, 32 angeschlossen ist. Auch die Verbindung zwischen dem Gehäuse des ersten Aufteilmoduls 42 und den Leistungsschaltergehäusen 13, 23, 33 ist mittels Flanschstutzen hergestellt.

Sämtliche Schaltgeräte, wie beispielsweise die Leistungsschalter 12, 22, 32, die Sammelschienentrenner 11, 21, 31 oder Erder, sind außerhalb des Gehäuses des ersten Aufteilmoduls 42 angeordnet. Im Innenraum des Aufteilmoduls 42 sind lediglich starre elektrische Leiter je von den einphasigen Schnittstellen 16, 26, 36 zu der ersten dreiphasigen Schnittstelle 51 geführt.

Abgangsseitig ist an die Leistungsschaltergehäuse 13, 23, 33 ein drittes Aufteilmodul 44 angeschlossen. Das dritte Aufteilmodul 44 besitzt hierzu drei einphasige Schnittstellen 18, 28, 38, mittels derer es mit je einem der Leistungsschaltergehäuse 13, 23, 33 verbunden ist. Das dritte Aufteilmodul 44 besitzt weiterhin eine zweite dreiphasige Schnittstelle 52, an welche eine dreiphasige Abgangseinheit 46 angeschlossen ist.

Die Abgangseinheit 46 ist in mehrere, hier nicht dargestellte, hintereinandergeschaltete Segmente unterteilt, in welchen weitere hier nicht dargestellte Komponenten, wie beispielsweise drei Abgangstrenner, drei Abgangserder und drei Schnellerder angeordnet sind. An der Abgangseinheit 46 ist ein hier nicht dargestellter dreiphasiger Spannungswandler befestigt, welcher die Spannungen der Leiter gegeneinander und/oder die Spannungen der Leiter gegen Erde misst.

Die Abgangseinheit 46 umfasst weiterhin abgangsseitig eine hier nicht gezeigte dreiphasige Anschlussstelle mit drei Kabelanschlusspunkten zum Anschluss eines Hochspannungskabels. Ebenso sind auch eine dreiphasige Freiluftdurchführung zum Anschluss an Seile einer Freileitung oder ein dreiphasiges Anschlusselement zum Anschluss eines Transformators denkbar.

Alternativ zu der abgangsseitig gelegenen dreiphasigen Anschlussstelle sind auch drei einphasige Anschlussstellen realisierbar, beispielsweise zum Anschluss von Hochspannungskabeln.

Schaltgeräte, wie beispielsweise die Leistungsschalter 12, 22, 32, Abgangstrenner oder Abgangserder, sind außerhalb des Gehäuses des dritten Aufteilmoduls 44 angeordnet. Im Innenraum des dritten Aufteilmoduls 44 sind lediglich starre elektrische Leiter je von den einphasigen Schnittstellen 18, 28, 38 zu der zweiten dreiphasigen Schnittstelle 52 geführt.

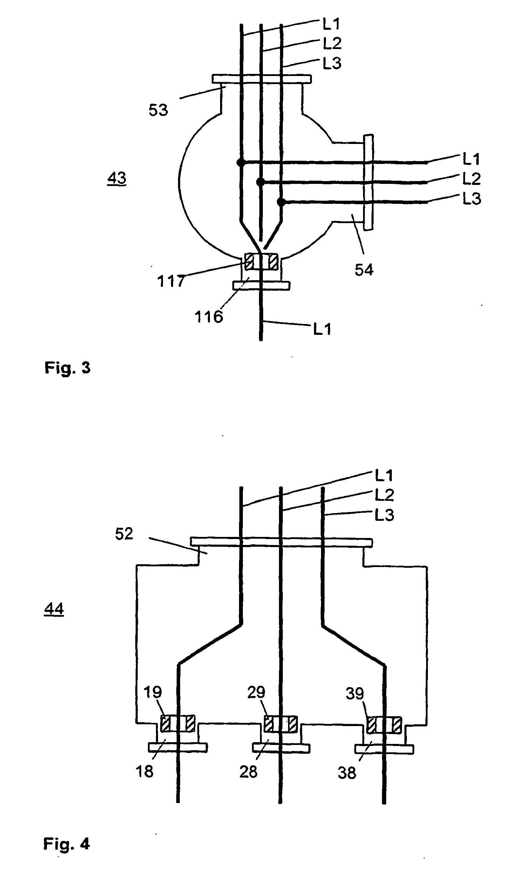

In Fig. 3 ist ein zweites Aufteilmodul 43 mit einer dritten dreiphasigen Schnittstelle 53 und einer vierten dreiphasigen Schnittstelle 54 dargestellt. Die dreiphasigen Schnittstellen 53, 54 dienen zum Anschluss an je eine Sammelschiene. Das zweite Aufteilmodul 43 besitzt dabei ein zylinderförmiges Gehäuse, dessen Mittelachse senkrecht zur Bildebene verläuft.

An der nach außen weisenden Seite dieses zylinderförmigen Gehäuses ist die dritte dreiphasige Schnittstelle 53 angebracht. Die dritte dreiphasige Schnittstelle 53 umfasst neben den drei elektrischen Phasenleiter L1, L2, L3 einen Flanschstutzen zur Befestigung an einem hier nicht gezeigten zweiten Sammelschienenmodul 41. Die drei elektrischen Phasenleiter L1, L2, L3 durchgreifen den Flanschstutzen der dritten dreiphasigen Schnittstelle 53 und sind mit Sammelschienentrennern eines Sammelschienenmoduls verbindbar.

Weiterhin ist an der nach außen weisenden Seite des zylinderförmigen Gehäuses des zweiten Aufteilmoduls 43 die vierte dreiphasige Schnittstelle 54 angebracht, welche ebenfalls drei elektrische Phasenleiter L1, L2, L3 sowie einen Flanschstutzen zur Befestigung an einem hier nicht gezeigten Sammelschienenmodul aufweist. Die drei elektrischen Phasenleiter L1, L2, L3 durchgreifen den Flanschstutzen der vierten dreiphasigen Schnittstelle 54 und sind mit Sammelschienentrennern eines Sammelschienenmoduls verbindbar.

Weiterhin befinden sich an der nach außen weisenden Seite des zylinderförmigen Gehäuses des zweiten Aufteilmoduls 43, in diesem Beispiel der dritten dreiphasigen Schnittstelle 53 diametral gegenüberliegend, eine siebte einphasige Schnittstelle 116, eine achte einphasige Schnittstelle und eine neunte einphasige Schnittstelle. Diese drei einphasigen Schnittstellen weisen jeweils einen Flanschstutzen zur Befestigung je eines hier nicht gezeigten Leistungsschaltergehäuses auf. In der gezeigten Darstellung ist nur die siebte einphasige Schnittstelle 116 sichtbar, die achte einphasigen Schnittstelle und die neunte einphasige Schnittstelle sind durch die siebte einphasige Schnittstelle 116 verdeckt.

Der erste elektrische Phasenleiter L1 durchgreift den Flanschstutzen der siebten einphasigen Schnittstelle 116 und ist mit einem einphasigen Leistungsschalter verbindbar.

Entsprechend durchgreift der zweite elektrische Phasenleiter L2 den Flanschstutzen der hier nicht sichtbaren achten einphasigen Schnittstelle und ist mit einem einphasigen Leistungsschalter verbindbar, und der dritte elektrische Phasenleiter L3 durchgreift den Flanschstutzen der hier nicht sichtbaren neunten einphasigen Schnittstelle und ist ebenfalls mit einem einphasigen Leistungsschalter verbindbar.

Der siebten einphasigen Schnittstelle 116 ist ein siebter Stromwandler 117 zugeordnet, welcher innerhalb des Gehäuses des zweiten Aufteilmoduls 43 im Nahbereich der siebten einphasigen Schnittstelle 116 angeordnet ist und den ersten Phasenleiter L1 umschließt.

Entsprechend ist der achten einphasigen Schnittstelle ein achter Stromwandler zugeordnet, welcher innerhalb des Gehäuses des zweiten Aufteilmoduls 43 im Nahbereich der achten einphasigen Schnittstelle angeordnet ist und den Phasenleiter L2 umschließt. Der neunten einphasigen Schnittstelle ist ein neunter Stromwandler zugeordnet, welcher innerhalb des Gehäuses des zweiten Aufteilmoduls 43 im Nahbereich der neunten einphasigen Schnittstelle angeordnet ist und den Phasenleiter L3 umschließt.

In der gezeigten Darstellung sind der Abschnitt des Phasenleiters L2, welcher durch die achte einphasige Schnittstelle verläuft, und der Abschnitt des Phasenleiters L3, welcher durch die neunte einphasige Schnittstelle verläuft, nicht sichtbar, da sie von dem ersten Phasenleiter L1 verdeckt sind. Ebenso sind der achte Stromwandler und der neunte Stromwandler durch den siebten Stromwandler 117 verdeckt.

Das zweite Aufteilmodul 43 weist in diesem Beispiel zwei dreiphasige Schnittstellen 53, 54 auf. Es ist jedoch auch denkbar, dass ein Aufteilmodul nur eine oder mehr als zwei, beispielsweise drei, dreiphasige Schnittstellen aufweist.

In Fig. 4 ist das dritte Aufteilmodul 44 zum Anschluss an eine Abgangseinheit dargestellt. Das dritte Aufteilmodul 44 weist eine zweite dreiphasige Schnittstelle 52 auf, welche neben den drei elektrischen Phasenleiter L1, L2, L3 einen Flanschstutzen zur Befestigung einer hier nicht gezeigten Abgangseinheit aufweist.

Weiterhin hat das dritte Aufteilmodul 44 eine vierte einphasige Schnittstelle 18, eine fünfte einphasige Schnittstelle 28 und eine sechste einphasige Schnittstelle 38. Die drei einphasigen Schnittstellen 18, 28, 38 umfassen jeweils einen Flanschstutzen zur Befestigung je eines hier nicht gezeigten Leistungsschaltergehäuses.

Ein Leiterabschnitt des ersten Phasenleiters L1 durchgreift den Flanschstutzen der zweiten dreiphasigen Schnittstelle 52 und ist durch den Innenraum des Gehäuses des dritten Aufteilmoduls 44 zu der vierten einphasigen Schnittstelle 18 geführt, die er ebenfalls durchgreift.

Ein Leiterabschnitt des zweiten Phasenleiters L2 durchgreift den Flanschstutzen der zweiten dreiphasigen Schnittstelle 52 und ist durch den Innenraum des Gehäuses des dritten Aufteilmoduls 44 zu der fünften einphasigen Schnittstelle 28 geführt, die er ebenfalls durchgreift. Entsprechend durchgreift ein Leiterabschnitt des dritten Phasenleiters L3 den Flanschstutzen der zweiten dreiphasigen Schnittstelle 52 und ist durch den Innenraum des Gehäuses des dritten Aufteilmoduls 44 zu der sechsten einphasigen Schnittstelle 38 geführt, die er ebenfalls durchgreift.

Ein vierter Stromwandler 19, welcher der vierten einphasigen Schnittstelle 18 zugeordnet ist, ist innerhalb des dritten Aufteilmoduls 44 im Nahbereich der vierten einphasigen Schnittstelle 18 angeordnet und umschließt den ersten Phasenleiter L1.

Entsprechend ist der fünften einphasigen Schnittstelle 28 ein fünfter Stromwandler 29 zugeordnet, welcher den Phasenleiter L2 umschließt, und der sechsten einphasigen Schnittstelle 38 ist ein sechster Stromwandler 39 zugeordnet, welcher den Phasenleiter L3 umschließt.

Im gezeigten Beispiel ist die zweite dreiphasige Schnittstelle 52 an der den einphasigen Schnittstellen 18, 28, 38 diametral gegenüberliegenden Seite des Gehäuses des dritten Aufteilmoduls 44 angeordnet. Auch andere Anordnungen sind denkbar. Beispielsweise ist die dreiphasige Schnittstelle 52 so anordenbar, dass ihre Mittelachse mit den Mittelachsen der einphasigen Schnittstellen 18, 28, 38 einen rechten Winkel bildet.

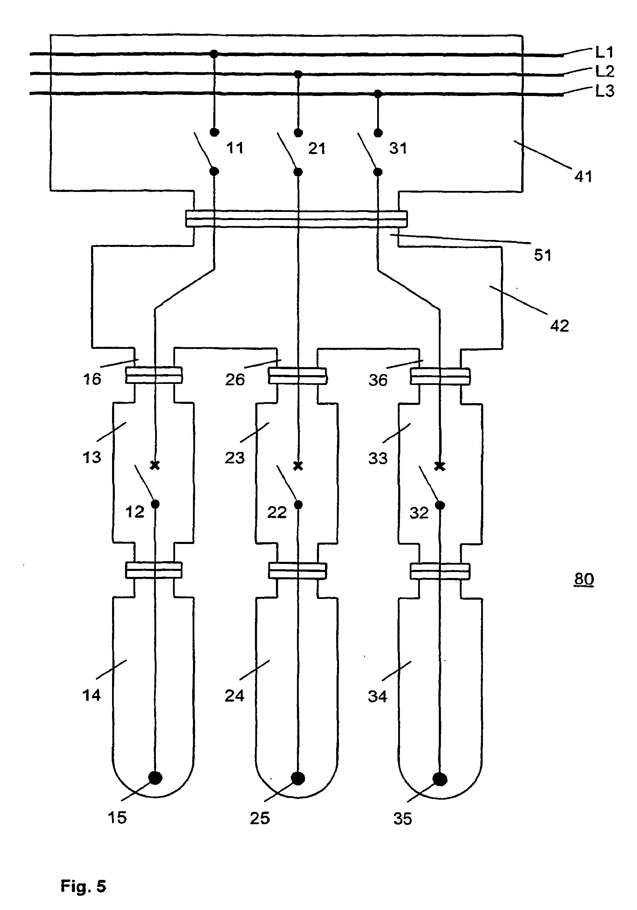

In Fig. 5 ist ein Schaltbild eines dritten dreiphasigen Abgangsfeldes 80 einer dreiphasigen Schaltanlage dargestellt. Das dritte Abgangsfeld 80 weist dabei ein zweites Sammelschienenmodul 41 auf. An der Außenseite des zylinderförmigen Gehäuses des zweiten Sammelschienenmoduls 41 ist ein radial vorspringender Flanschstutzen angebracht, an welchem ein erstes Aufteilmodul 42 mittels des Flanschstutzens seiner ersten dreiphasigen Schnittstelle 51 befestigt ist.

An die einphasigen Schnittstellen 16, 26, 36 des ersten Aufteilmoduls 42 ist je ein einphasiger Leistungsschalter 12, 22, 32 angeschlossen. An die Leistungsschaltergehäuse 13, 23, 33 der einphasigen Leistungsschalter 12, 22, 32 schließen dabei je ein einphasiges Abgangsgehäuse 14, 24, 25 an.

### Bezugiszeichenliste

- L1:: erster Phasenleiter
- L2:: zweiter Phasenleiter
- L3:: dritter Phasenleiter

- 11:: erster Sammelschienentrenner
- 12:: erster Leistungsschalter
- 13:: erstes Leistungsschaltergehäuse
- 14:: erstes Abgangsgehäuse
- 15:: erster Kabelanschlusspunkt
- 16:: erste einphasige Schnittstelle
- 17:: erster Stromwandler
- 18:: vierte einphasige Schnittstelle
- 19:: vierter Stromwandler
- 116:: siebte einphasige Schnittstelle
- 117:: siebter Stromwandler
- 118:: erster Flanschstutzen

- 21:: zweiter Sammelschienentrenner
- 22:: zweiter Leistungsschalter
- 23:: zweites Leistungsschaltergehäuse
- 24:: zweites Abgangsgehäuse
- 25:: zweiter Kabelanschlusspunkt
- 26:: zweite einphasige Schnittstelle
- 27:: zweiter Stromwandler
- 28:: fünfte einphasige Schnittstelle
- 29:: fünfter Stromwandler
- 128:: zweiter Flanschstutzen

- 31:: dritter Sammelschienentrenner
- 32:: dritter Leistungsschalter
- 33:: drittes Leistungsschaltergehäuse
- 34:: drittes Abgangsgehäuse
- 35:: dritter Kabelanschlusspunkt
- 36:: dritte einphasige Schnittstelle
- 37:: dritter Stromwandler
- 38:: sechste einphasige Schnittstelle
- 39:: sechster Stromwandler
- 138:: dritter Flanschstutzen

- 40:: erstes Sammelschienenmodul
- 41:: zweites Sammelschienenmodul
- 42:: erstes Aufteilmodul
- 43:: zweites Aufteilmodul
- 44:: drittes Aufteilmodul
- 46:: Abgangseinheit

- 51:: erste dreiphasige Schnittstelle
- 52:: zweite dreiphasige Schnittstelle
- 53:: dritte dreiphasige Schnittstelle
- 54:: vierte dreiphasige Schnittstelle

- 60:: erstes Abgangsfeld
- 70:: zweites Abgangsfeld
- 80:: drittes Abgangsfeld

## Patentansprüche

1. Aufteilmodul (43) für eine gasisolierte Hochspannungsschaltanlage, zur Anbindung von Sammelschienenmodulen mit dreiphasigen Schnittstellen an drei einphasige Leistungsschalter, welches zwei dreiphasige Schnittstellen (53,54) und drei einphasige Schnittstellen (116) aufweist, mit drei Phasenleitern (L1, L2, L3), wobei jeweils einer der Phasenleiter (L1, L2, L3) von den zwei dreiphasigen Schnittstellen (53, 54) zu je einer der einphasigen Schnittstellen (116) geführt ist,
wobei
das Aufteilmodul (43) ein zylinderförmiges Gehäuse besitzt, und dass die zwei dreiphasigen Schnittstellen (53,54) an der nach außen weisenden Seite der Mantelfläche des zylinderförmigen Gehäuses des Aufteilmoduls (43) angebracht sind, wobei eine der zwei dreiphasigen Schnittstellen (53,54) an der den einphasigen Schnittstellen (116) diametral gegenüberliegenden Seite des zylinderförmigen Gehäuses des Aufteilmoduls (43) angebracht ist, wobei die zwei dreiphasigen Schnittstellen jeweils einen Flanschstutzen zur Befestigung an einem Sammelschienenmodul umfassen.

2. Aufteilmodul (42, 43) nach einem der Ansprüche 1, **dadurch gekennzeichnet, dass** im Innenraum des Gehäuses des Aufteilmoduls (42, 43) Schaltgeräte vermieden sind.

3. Aufteilmodul (42, 43) nach einem der vorstehenden Ansprüche, **dadurch gekennzeichnet, dass** im Innenraum des Gehäuses des Aufteilmoduls (42, 43) jedem Phasenleiter (L1, L2, L3) mindestens ein Stromwandler (17, 27, 37, 19, 29, 39) zugeordnet ist.

4. Aufteilmodul (42, 43) nach Anspruch 3, **dadurch gekennzeichnet, dass** für jeden Phasenleiter (L1, L2, L3) mindestens einer der Stromwandler (17, 27, 37, 19, 29, 39) im Nahbereich von dessen einphasiger Schnittstelle (16, 26, 36, 18, 28, 38) angeordnet ist.

5. Gasisolierte Hochspannungsschaltanlage, mit mindestens einer drei Phasenleiter (L1, L2, L3) aufweisenden Sammelschiene, wobei jeder Phasenleiter (L1, L2, L3) mit dem Eingang eines ihm zugeordneten Sammelschienentrenners (11, 21, 31) verbunden ist, wobei die Phasenleiter (L1, L2, L3) und die Sammelschienentrenner (11,21,31) in einem dreiphasigen Sammelschienenmodul (40, 41) angeordnet sind, und mit drei einphasigen Leistungsschaltem (12, 22, 32), welche je in einem separaten Leistungsschaltergehäuse (13, 23, 33) angeordnet sind, wobei jeder Sammelschienentrenner (11, 21, 31) ausgangsseitig mit je einem ihm zugeordneten Leistungsschalter (12, 22, 32) verbunden ist,
**dadurch gekennzeichnet, dass**
die Hochspannungsschaltanlage mindestens ein Aufteilmodul (42, 43) nach einem der vorstehenden Ansprüche aufweist,
wobei das Aufteilmodul (42, 43) dem Sammelschienen modul (41) und den Leistungsschaltern (12, 22, 32) zwischengeschaltet ist.

6. Hochspannungsschaltanlage nach Anspruch 5, **dadurch gekennzeichnet, dass** die Sammelschienentrenner (11, 21, 31) in dem Sammelschienenmodul (40, 41) und die Leistungsschalter (12, 22,32) einem Sammelschienenabzweig zugeordnet sind.

7. Hochspannungsschaltanlage nach einem der Anspruche 5 bis 6, **dadurch gekennzeichnet, dass** einer dreiphasigen Abgangseinheit (46) und den Leistungsschaltern (12, 22, 32) ein Aufteilmodul (44) zwischengeschaltet ist.

8. Hochspannungsschaltanlage nach einem der Anspruche 5 bis 7, **dadurch gekennzeichnet, dass** jedem Leistungsschalter (12, 22, 32) mindestens zwei Stromwandler zugeordnet sind, wobei mindestens ein Stromwandler (17, 27, 37) eingangsseitig und mindestens ein Stromwandler (19, 29, 39) ausgangsseitig des jeweiligen Leistungsschalters (12, 22, 32) angeordnet sind.

## Claims

1. A distributing module (43) for a gas-insulated high-voltage switchgear, for linking bus bar modules with three-phase interfaces to three single-phase power switches, comprising two three-phase interfaces (53, 54) and three single-phase interfaces (116), three phase conductors (L1, L2, L3), with one each of the phase conductors (L1, L2, L3) being guided by the two three-phase interfaces (53, 54) to one each of the single-phase interfaces (116), wherein the distributing module (43) comprises a cylindrical housing and wherein the two three-phase interfaces (53, 54) are attached to that side of the lateral surface of the cylindrical housing of the distributing module (43) which faces outwardly and wherein one of the two three-phase interfaces (116) is arranged at that side of the cylindrical housing of the distributing module (43) which is diametrically opposite to the single-phase interfaces (116), and wherein the two three-phase interfaces comprise each a flange stub for fastening to a bus bar module.

2. A distributing module (42, 43) according to one of the claims 1, **characterized in that** switching devices are avoided in the interior space of the housing of the distributing module (42, 43).

3. A distributing module (42, 43) according to one of the preceding claims, **characterized in that** each phase conductor (L1, L2, L3) is associated with at least one current transformer (17, 27, 37, 19, 29) in the interior space of the housing of the distributing module (42, 43).

4. A distributing module (42, 43) according to claim 3, **characterized in that** for each phase conductor (L1, L2, L3) at least one of the current transformers (17, 27, 37, 19, 29, 39) is arranged in the close vicinity of its single-phase interface (16, 26, 36, 18, 28, 38).

5. A gas-insulated high-voltage switchgear, comprising at least one bus bar with three phase conductors (L1, L2, L3), with each phase conductor (L1, L2, L3) being connected to the input of the respectively associated bus bar section (11, 21, 31), with the phase conductor (L1, L2, L3) and the bus bar section (11, 21, 31) being arranged in a three-phase bus bar module (40, 41), and three single-phase power switches (12, 22, 32) which are each arranged in a separate power switch housing (13, 23, 33), with each bus bar section (11, 21, 31) being connected at the output side to a power switch (12, 22, 32) each associated with the same, **characterized in that** the high-voltage switchgear comprises at least one distributing module (42, 43) according to one of the preceding claims, wherein the distributing module (42, 43) is interposed between the bus bar module (41) and the power switches (12, 22, 32).

6. A high-voltage switchgear according to claim 5, **characterized in that** the bus bar sections (11, 21, 31) in the bus bar module (40, 41) as well as the power switches (12, 22, 32) are associated with a bus bar branch.

7. A high-voltage switchgear according to one of the claims 5 to 6, **characterized in that** a distributing module (44) is interposed between a three-phase outgoing unit (46) and the power switches (12, 22, 32).

8. A high-voltage switchgear according to one of the claims 5 to 7, **characterized in that** at least two current transformers are associated with each power switch (12, 22, 32), with at least one current transformer (17, 27, 37) being arranged on the input side of the respective power switch (12, 22, 32) and at least one current transformer (19, 29, 39) on the output side thereof.

## Revendications

1. Module diviseur (43) pour un appareillage commutation haute tension à isolation gazeuse, destiné à relier des modules de barre collectrice avec des interfaces triphasées sur trois disjoncteurs de puissance monophasée,
comprenant deux interfaces triphasées (53, 54) et trois interfaces monophasées (116), avec trois conducteurs de phase (L1, L2, L3), chacun des conducteurs de phase (L1, L2, L3) étant amené des deux interfaces triphasées (53, 54) à l'une des interfaces monophasées (116),
le module diviseur (43) possedant un boîtier cylindrique et les deux interfaces triphasées (53, 54) étant disposées sur le côté tourné vers l'extérieur du surface latéral du boitier cylindrique du module diviseur (43),
une des deux interfaces triphasées (53, 54) étant placée diamétralement opposée aux interfaces monophasées (116) du boîtier cylindrique du module diviseur (43),
les deux interfaces triphasées comprenant chacune une bride à emboîtement pour la fixation sur un module de barre collectrice.

2. Module diviseur (42, 43) selon l'une des revendications 1, **caractérisé en ce que** les appareils de commutation sont évités à l'intérieur du boîtier du module diviseur (42, 43).

3. Module diviseur (42, 43) selon l'une des revendications précédentes, **caractérisé en ce qu'**à l'intérieur du boîtier du module diviseur (42, 43), chaque conducteur de phase (L1, L2, L3) est associé à au moins un transformateur d'intensité (17, 27, 37, 19, 29, 39).

4. Module diviseur (42, 43) selon la revendication 3, **caractérisé en ce que** pour chaque conducteur de phase (L1, L2, L3), au moins un des transformateurs d'intensité (17, 27, 37, 19, 29, 39) est disposé à proximité de son interface monophasée (16, 26, 36, 18, 28, 38).

5. Appareillage de commutation haute tension à isolation gazeuse, avec au moins une barre collectrice comprenant trois conducteurs de phase (L1, L2, L3), chaque conducteur de phase (L1, L2, L3) étant relié à l'entrée d'un sectionneur de barre collectrice (11, 21, 31) qui lui est associé, les conducteurs de phase (L1, L2, L3) et les sectionneurs de barre collectrice (11, 21, 31) étant disposés dans un module de barre collectrice (40, 41) triphasé, et avec trois disjoncteurs de puissance monophasés (12, 22, 32), qui sont disposés chacun dans un boîtier de disjoncteur de puissance (13, 23, 33) séparé, chaque sectionneur de barre collectrice (11, 21, 31) étant relié du côté de la sortie avec un disjoncteur de puissance (12, 22, 32) qui lui est associé, **caractérisé en ce que** l'appareillage de commutation haute tension comprend au moins un module diviseur (42, 43) selon l'une des revendications précédentes,
le module diviseur (42, 43) étant monté entre le module de barre collectrice (41) et les disjoncteurs de puissance (12, 22, 32).

6. Appareillage de commutation haute tension selon la revendication 5, **caractérisé en ce que** les sectionneurs de barre collectrice (11, 21, 31) dans le module de barre collectrice (40, 41) et les disjoncteurs de puissance (12, 22, 32) sont associés à un branchement de barre collectrice.

7. Appareillage de commutation haute tension selon l'une des revendications 5 à 6, **caractérisé en ce qu'**un module diviseur (44) est monté entre une installation de sortie triphasée (46) et les disjoncteurs de puissance (12, 22, 32).

8. Appareillage de commutation haute tension selon l'une des revendications 5 à 7, **caractérisé en ce que** chaque disjoncteur de puissance (12, 22, 32) est associé au moins à deux transformateurs d'intensité, au mois un transformateur d'intensité (17, 27, 37) étant disposé du côté de l'entrée et au moins un transformateur d'intensité (19, 29, 39) du côté de la sortie du disjoncteur de puissance (12, 22, 32) correspondant.
